# NEUE EUROPÄISCHE PATENTSCHRIFT

(11) **EP 2 983 975 B2**
(45) Veröffentlichungstag und Bekanntmachung des Hinweises auf die Entscheidung über den Einspruch: **20.07.2022**
(45) Hinweis auf die Patenterteilung: 02.01.2019
(21) Anmeldenummer: 14704150.3
(22) Anmeldetag: 13.02.2014
(51) Int. Cl.: B62M 25/08

(54) **PEDALGETRIEBENES FAHRZEUG SOWIE VERFAHREN ZUM BETREIBEN DES PEDALGETRIEBENEN FAHRZEUGS**
PEDAL-DRIVEN VEHICLE AND METHOD FOR OPERATING THE PEDAL-DRIVEN VEHICLE
VÉHICULE À PÉDALES ET PROCÉDÉ POUR FAIRE FONCTIONNER UN VÉHICULE À PÉDALES

(30) Priorität: 08.04.2013 DE 102013206163
(43) Veröffentlichungstag der Anmeldung: 17.02.2016
(73) Patentinhaber: Robert Bosch GmbH, 70442 Stuttgart (DE)
(72) Erfinder: KIMMICH, Peter, 71144 Steinenbronn (DE)
(74) Vertreter: Hoefer & Partner Patentanwälte mbB
(86) Internationale Anmeldenummer: PCT/EP2014/052766
(87) Internationale Veröffentlichungsnummer: WO 2014/166655

(56) Entgegenhaltungen:
- EP-A2- 1 258 422
- EP-A2- 1 394 035
- EP-A2- 1 886 913
- DE-A1- 10 243 751
- DE-A1-102005 029 666
- DE-A1-102009 011 882
- DE-U1-202005 010 046
- DE-U1-202005 018 126
- JP-A- H11 180 376
- JP-A- 2005 132 274
- JP-A- 2009 196 570
- US-B2- 6 629 574

## Beschreibung

### Stand der Technik

Die vorliegende Erfindung betrifft ein Elektrofahrrad, sowie ein Verfahren zum Betreiben eines Elektrofahrrads.

In jüngster Zeit werden verstärkt Fahrräder, welche einen üblichen Pedalantrieb aufweisen, zusätzlich mit einem elektrischen Antrieb versehen. Hierbei gibt es verschiedene Anordnungsmöglichkeiten des elektrischen Antriebs, wobei insbesondere die sog. "Mittelmotoranordnung", bei der der elektrische Antrieb am Kurbeltrieb angeordnet wird, konzeptionelle Vorteile bietet. Ferner ist aus dem Fahrradbereich eine halbautomatisierte Schaltung bekannt, bei welcher ein Schaltvorgang durch Drücken eines Knopfes oder dgl. ausgelöst werden kann, und der Schaltvorgang durch einen elektrischen Aktuator an der Gangschaltung ausgeführt wird. Diese Gangschaltungen sind insbesondere sehr komfortabel. Ein Problemkreis bei den bekannten Gangschaltungen, welcher sowohl Kettenschaltungen als auch Nabenschaltungen betrifft, ist, dass die Gangschaltungen im Stand nicht geschaltet werden können. Somit kann es vorkommen, dass nach einem Fahren in einem hohen Gang bei einem Stillstand des Fahrrads immer noch der hohe Gang eingelegt ist, so dass sich hier Anfahrprobleme durch den zu groß eingelegten Gang ergeben. Dokument EP1394035A2 offenbart ein Fahrrad mit einer elektrischen Schaltung. Mittels eines elektrische Antriebs wird der Umwerfer betätigt.

### Offenbarung der Erfindung

Das erfindungsgemäße pedal- bzw. muskelgetriebene Elektrofahrrad, nachfolgend als Fahrzeug bezeichnet, mit den Merkmalen des Anspruchs 1 weist demgegenüber den Vorteil auf, dass ein Schalten einer Gangschaltung auch bei Nichtpedalieren durch einen Fahrer möglich ist. Erfindungsgemäß wird hierbei ein elektrischer Antrieb dazu verwendet, eine Kette zu bewegen, so dass ein problemloser Gangwechsel möglich ist. Hierzu ist erfindungsgemäß neben dem elektrischen Antrieb und einer Stromversorgung, insbesondere einer Batterie, eine Gangschaltung und ein elektrischer Aktuator zur Betätigung der Gangschaltung vorhanden. Eine Steuereinheit steuert den elektrischen Antrieb und den elektrischen Aktuator an, wobei die Steuereinheit derart eingerichtet ist, dass bei einem Gangwechselbefehl der elektrische Antrieb angesteuert wird, so dass die Kette bewegt wird, um den Gangwechsel mittels des elektrischen Aktuators zu ermöglichen. Somit kann erfindungsgemäß ein Gangwechsel erfolgen, ohne dass ein Fahrer hierzu in die Pedale treten muss. Weiter umfasst das erfindungsgemäße Fahrzeug ferner wenigstens einen Drehmomentsensor, welcher eingerichtet ist, ein durch einen Fahrer aufgebrachtes Drehmoment am Kurbeltrieb zu erfassen. Die Steuereinrichtung ist dabei derart eingerichtet, den elektrischen Aktuator der Gangschaltung derart zu steuern, dass bei Erfassen keines Drehmoments die Gangschaltung in einen kleineren Gang als der aktuelle Gang geschaltet wird.

Die Unteransprüche zeigen bevorzugte Weiterbildungen der Erfindung.

Besonders bevorzugt ist die Steuereinheit derart eingerichtet, dass die Kette aus einem Stillstandszustand heraus bewegbar ist. D.h., die Kette wird bevorzugt dann durch den elektrischen Antrieb bewegt, wenn beispielsweise das Fahrrad ausrollt. Besonders bevorzugt wird aus einem Stillstandszustand heraus die Gangschaltung heruntergeschaltet, um nach einem Anhalten des Fahrzeugs ein leichteres Anfahren zu ermöglichen. Um Fehlschaltungen zu vermeiden, wird der Gangwechselbefehl ausschließlich aus einem Stillstand der Kette ausgeführt.

Weiter bevorzugt umfasst das Fahrzeug einen Kurbeltriebsensor, welcher eingerichtet ist, eine durch einen Fahrer hervorgerufene Bewegung eines Kurbeltriebs zu erfassen. Die Steuereinrichtung ist dabei derart eingerichtet, den elektrischen Aktuator der Gangschaltung so anzusteuern, dass bei Erfassen keiner Kurbelbewegung die Gangschaltung in einen kleineren Gang als der aktuelle Gang schaltet. Besonders bevorzugt schaltet der elektrische Aktuator die Gangschaltung in den ersten Gang. Mit anderen Worten, sobald der Kurbeltriebsensor keine Bewegung des Kurbeltriebs erfasst, d.h., wenn der Fahrer nicht pedaliert, wird die Gangschaltung in einen kleineren Gang zurückgeschaltet. Dadurch hat der Fahrer den Vorteil, dass, sobald er wieder mit dem Pedalieren beginnt, in der Gangschaltung schon ein kleinerer Gang eingelegt ist, so dass ein problemloses Wiederstarten des Pedalierens möglich ist. Insbesondere nach einem Anhalten des Fahrzeugs kann ein Anfahren durch den schon eingelegten kleinen Gang deutlich erleichtert werden.

Besonders bevorzugt erfolgt die Drehmomenterfassung gleichzeitig mit der Bewegungserfassung des Kurbeltriebs, so dass eine redundante Erfassung eines Pedalieren des Fahrers oder eines Stillhalten des Fahrers ermöglicht wird. Dabei hat die Erfassung eines durch den Fahrer aufgebrachten Drehmoments insbesondere den Vorteil, dass beispielsweise bei einem Ausrollen des Fahrzeugs der Fahrer noch leicht pedalieren kann, ohne dass dadurch ein zusätzliches Drehmoment aufgebracht wird. Trotzdem reduziert sich in einem derartigen Fall die Geschwindigkeit des Fahrzeugs, so dass es sinnvoll wäre, in einen kleineren Gang zu schalten.

Gemäß einer weiteren bevorzugten Ausgestaltung der Erfindung umfasst das Fahrzeug ferner eine halbautomatische Schalteinrichtung, über welche ein Fahrer einen Gangwechselbefehl eingibt. Zusätzlich oder alternativ ist die Steuereinrichtung derart eingerichtet, einen Wirkungsgrad des elektrischen Antriebs zu bestimmen und basierend auf dem bestimmten Wirkungsgrad des elektrischen Antriebs einen Gangwechselbefehl auszugeben. Der Wirkungsgrad des elektrischen Antriebs kann beispielsweise in Abhängigkeit von erfassten Parametern wie Drehzahl, abgegebenes Drehmoment des elektrischen Antriebs, usw., erfasst werden.

Weiter bevorzugt umfasst das Fahrzeug ferner einen Geschwindigkeitssensor zur Erfassung einer Fahrzeuggeschwindigkeit, wobei die Steuereinheit eingerichtet ist, bei einem Gangwechselbefehl einen Gang in Abhängigkeit der Fahrzeuggeschwindigkeit zu wählen. Beispielsweise umfasst die Steuereinheit hierbei einen Speicher, in welchem vorbestimmte Geschwindigkeitsbereiche abgespeichert sind, welche einem vorbestimmten Gang zugeordnet sind. Beispielsweise kann bei einer Geschwindigkeit von Null, d.h., einem stehenden Fahrzeug, der kleinste Gang eingelegt werden.

Weiter ist der elektrische Antrieb des Elektrofahrrads dabei als Mittenantrieb angeordnet, d.h., der elektrische Antrieb ist im Bereich des Kurbeltriebs angeordnet.

Weiter bevorzugt ist die Gangschaltung des pedalgetriebenen Fahrzeugs eine Kettenschaltung.

Ferner betrifft die vorliegende Erfindung ein Verfahren zum Betreiben eines pedalgetriebenen Fahrzeugs, wobei in einem ersten Schritt ein Gangwechselbefehl durch eine Steuereinheit erfasst wird. Anschließend wird der elektrische Antrieb angetrieben, um die Kette zu bewegen, so dass ein Gangwechsel möglich wird. Gleichzeitig wird durch einen elektrischen Aktuator an der Gangschaltung ein Gangwechsel ausgeführt. Somit kann bei dem erfindungsgemäßen Verfahren ein Gangwechsel mittels einer automatischen oder halbautomatischen Gangschaltung ausgeführt werden, obwohl der Fahrer nicht pedaliert und die Kette eigentlich still steht. Dies wird erfindungsgemäß durch Ansteuerung des elektrischen Antriebs überwunden, welcher dann die Kette bewegt, so dass ein Schalten der Gangschaltung, in einen kleineren Gang möglich ist, wenn kein vom Fahrer aufgebrachtes Drehmoment am Kurbelbetrieb erfasst wird.

Besonders bevorzugt wird die Kette durch den elektrischen Antrieb aus einem Stillstandszustand heraus bewegt. Weiter bevorzugt schaltet der elektrische Antrieb die Gangschaltung in einen kleineren Gang als einen beim Gangwechselbefehl eingelegten Gang. Insbesondere schaltet der elektrische Aktuator die Gangschaltung in den kleinsten Gang, wenn eine Geschwindigkeit des Fahrzeugs gleich Null ist.

Weiter bevorzugt wird der durch die Gangschaltung einzulegende Gang in Abhängigkeit einer Geschwindigkeit des Fahrzeugs eingelegt. Hierbei ermittelt eine Steuereinheit eine Fahrzeuggeschwindigkeit und vergleicht die erfasste Fahrzeuggeschwindigkeit mit abgespeicherten Fahrzeuggeschwindigkeiten, wobei den abgespeicherten Fahrzeuggeschwindigkeiten jeweils ein vorbestimmter Gang zugeordnet ist. Das erfindungsgemäße Verfahren wird in Verbindung mit einem Elektrofahrrad, mit Mittelmotor, verwendet.

### Zeichnung

Nachfolgend wird ein bevorzugtes Ausführungsbeispiel der Erfindung unter Bezugnahme auf die begleitende Zeichnung im Detail beschrieben. In der Zeichnung ist:

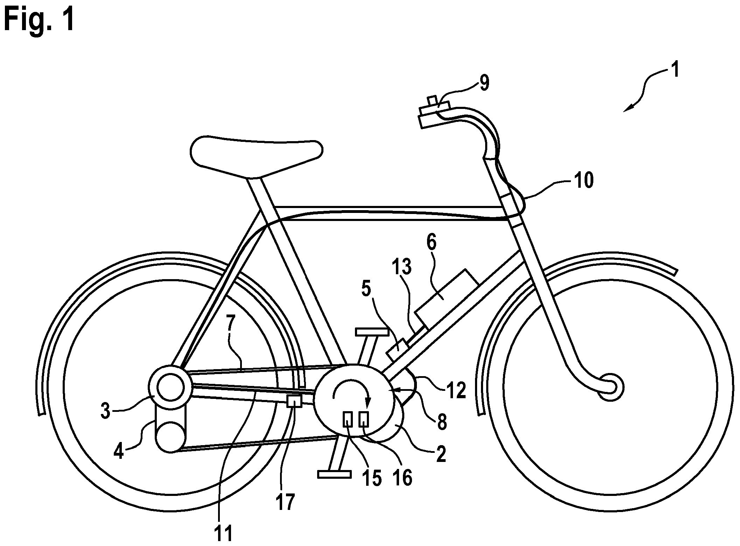

- Figur 1: eine schematische Ansicht eines Fahrzeugs gemäß einem bevorzugten Ausführungsform der Erfindung.

### Bevorzugte Ausführungsform der Erfindung

Figur 1 zeigt ein Elektrofahrrad 1 gemäß einem bevorzugten Ausführungsbeispiel der Erfindung.

Das erfindungsgemäße Elektrofahrrad 1 umfasst einen elektrischen Antrieb 2, welcher über Verbindungsleitungen 12, 13 mit einer Steuereinheit 5 und einer Batterie 6 als elektrische Energieversorgung verbunden ist. Ferner umfasst das Elektrofahrrad 1 eine Gangschaltung 4, welche in diesem Ausführungsbeispiel eine Kettenschaltung ist. An der Gangschaltung 4 ist ein elektrischer Aktuator 3 angeordnet, welcher über eine Verbindungsleitung 11 mit der Steuereinheit 5 verbunden ist. Der elektrische Aktuator 3 schaltet dabei die Gangschaltung 4 auf Befehl eines am Lenker angeordneten Schalters 9, welcher über eine Verbindungsleitung 10 mit dem elektrischen Aktuator 3 und der Steuereinheit 5 verbunden ist.

Das Elektrofahrrad 1 dieses Ausführungsbeispiels umfasst somit eine zentrale Steuereinheit 5, welche alle elektrisch betreibbaren Einrichtungen, d.h., den elektrischen Aktuator 3 und den elektrischen Antrieb 2, steuert. Alternativ wäre es auch möglich, einzelne Steuereinheiten für die jeweiligen elektrisch betreibbaren Einrichtungen vorzusehen.

Wie weiter aus Figur 1 ersichtlich ist, ist in diesem Ausführungsbeispiel der elektrische Antrieb 2 unmittelbar an einem Kurbeltrieb 8 angeordnet, so dass es sich bei diesem Ausführungsbeispiel um einen sog. "Mittelmotor" handelt.

Ferner umfasst das Elektrofahrrad 1 eine Vielzahl von Sensoren. In Figur 1 ist mit dem Bezugszeichen 15 ein Kurbeltriebsensor vorgesehen, welcher am Kurbeltrieb 8 angeordnet ist und eine durch einen Fahrer über Pedale hervorgerufene Bewegung des Kurbeltriebs erfasst. Der Kurbeltriebsensor 15 kann beispielsweise eine Rotation einer Kurbeltriebwelle erfassen. Ferner ist ein Drehmomentsensor 16 am Kurbeltrieb 8 vorgesehen, welcher ein durch den Fahrer aufgebrachtes Drehmoment erfasst. Der Drehmomentsensor 16 kann beispielsweise Dehnungsmessstreifen oder dgl. umfassen. Ferner ist ein Geschwindigkeitssensor 17 vorgesehen, welcher eine Rotation eines Rades des Elektrofahrrads 1 erfasst. Die Steuereinheit 5 kann basierend auf der Drehzahl des Rades dann eine Geschwindigkeit des Elektrofahrrads berechnen. Alle Sensoren sind dabei wieder mit der zentralen Steuereinheit 5 verbunden.

Erfindungsgemäß ist die Steuereinheit 5 nun derart eingerichtet, dass bei einem Gangwechselbefehl der elektrische Antrieb 2 die Kette 7 bewegt, so dass ein Gangwechsel mittels des elektrischen Aktuators 3 ermöglicht wird. Erfindungsgemäß kann hierbei insbesondere bei einem Stillstand der Kette 7 ein Schaltvorgang trotzdem vorgenommen werden.

Der Gangwechselbefehl kann über den Schalter 9 durch einen Fahrer eingegeben werden, oder die Steuereinheit 5 kann, basierend auf den durch die Sensoren erfassten Fahrzustände, automatisch einen Gangwechselbefehl ausgeben. Besonders bevorzugt überprüft die Steuereinheit 5 hierbei einen Wirkungsgrad des elektrischen Antriebs 2, so dass ein Schaltbefehl aus Wirkungsgrad-Gesichtspunkten möglich ist. Alternativ kann beispielsweise auch in Abhängigkeit einer Trittfrequenz durch den Fahrer ein automatischer Schaltbefehl durch die Steuereinheit 5 ausgegeben werden.

Die vorliegende Erfindung ermöglicht insbesondere erstmals einen Schaltvorgang bei einem stehenden Elektrofahrrad. Dabei kann die Steuereinheit 5 derart programmiert sein, dass beispielsweise bei einem Ausrollen des Elektrofahrrads 1, bei dem der Fahrer die Pedale nicht mehr betätigt und die Kette 7 stillsteht, ein Schaltbefehl zum Herunterschalten der Gänge durch die Steuereinheit 5 ausgegeben werden kann, so dass in Abhängigkeit der Fahrgeschwindigkeit jeweils ein kleinerer Gang eingelegt wird. Wenn das Elektrofahrrad 1 dann zum Stillstand gekommen ist, legt die Steuereinheit 5 den kleinsten Gang ein, so dass bei einem Wiederanfahren des Elektrofahrrads der kleinste Gang schon eingelegt ist und mit optimalem Wirkungsgrad eine Unterstützung durch den elektrischen Antrieb 2 bereitgestellt werden kann, falls dies durch den Fahrer gewünscht ist. Beim Ausrollen des Fahrrads ohne Pedalbetätigung durch den Fahrer kann die Steuereinheit 5 jeweils einen entsprechenden Gang in Abhängigkeit einer Geschwindigkeit des Elektrofahrrads einlegen, so dass, wenn der Fahrer wieder mit dem Pedalieren beginnt (auch ohne Anhalten), schon gleich der optimale Gang eingelegt ist. Eine Verstellung der Gangschaltung 4 erfolgt dabei jeweils mittels des elektrischen Aktuators 3.

Der elektrische Aktuator 3 kann über die Batterie 6 mit Energie versorgt werden oder es ist zusätzlich ein Nabendynamo vorgesehen, welcher den elektrischen Aktuator 3 mit Energie versorgt.

Somit kann erfindungsgemäß ein Fahrkomfort deutlich erhöht werden und ein Schaltvorgang kann ohne Mithilfe durch den Fahrer, d.h., ohne gezieltes Treten, ausgeführt werden. Der Schaltvorgang findet dabei bei abgestimmten Geschwindigkeiten schneller und sicherer statt, so dass eine Effizienzerhöhung beim Schalten erreicht wird. Ferner werden Belastungen der Zahnräder der Gangschaltung sowie, falls vorhanden, eines Getriebes am elektrischen Antrieb 2 reduziert. Hieraus resultiert auch eine Verringerung eines Verschleißes der Bauteile der Gangschaltung und des elektrischen Antriebs 2 sowie des Getriebes.

## Patentansprüche

1. Elektrofahrrad, umfassend:
- einen elektrischen Antrieb (2), der unmittelbar an einem Kurbeltrieb (8) als Mittelmotor angeordnet ist,
- eine Stromversorgung (6),
- eine Kette (7),
- eine Gangschaltung (4), die als Kettenschaltung ausgebildet ist,
- einen elektrischen Aktuator (3) zur Betätigung der Gangschaltung (4), und
- eine Steuereinheit (5), um den elektrischen Antrieb (2) und den elektrischen Aktuator (3) anzusteuern,
- wobei die Steuereinheit (5) eingerichtet ist, bei einem Gangwechselbefehl den elektrischen Antrieb (2) anzutreiben, um die Kette (7) zu bewegen, um einen Gangwechsel mittels des elektrischen Aktuators (3) zu ermöglichen,
**dadurch gekennzeichnet, dass** das Elektrofahrrad folgende Komponente aufweist
- einen Drehmomentsensor (16), welcher eingerichtet ist, ein durch einen Fahrer aufgebrachtes Drehmoment zu erfassen,
- wobei die Steuereinheit (5) eingerichtet ist, den elektrischen Aktuator (3) derart anzusteuern, dass bei Erfassen keines Drehmoments am Kurbeltrieb die Gangschaltung in einen kleineren Gang als den aktuellen Gang schaltet.

2. Elektrofahrrad nach Anspruch 1, **dadurch gekennzeichnet, dass** die Steuereinheit (5) eingerichtet ist, die Kette aus einem Stillstand herauszubewegen.

3. Elektrofahrrad nach einem der vorhergehenden Ansprüche, ferner umfassend einen Kurbeltriebsensor (15), welcher eingerichtet ist, eine durch einen Fahrer hervorgerufene Bewegung des Kurbeltriebs zu erfassen, wobei die Steuereinheit (5) eingerichtet ist, den elektrischen Aktuator (3) derart anzusteuern, dass bei Erfassen eines Stillstands des Kurbeltriebs die Gangschaltung (4) in einen kleineren Gang als den aktuellen Gang schaltet.

4. Elektrofahrrad nach einem der vorhergehenden Ansprüche, ferner umfassend:
- eine halbautomatische Schalteinrichtung (9), über welche ein Fahrer einen Gangwechselbefehl eingibt, und/oder
- eine Auswerteeinheit, welche eingerichtet ist, basierend auf Fahrzustandsgrößen des Elektrofahrrad einen automatischen Gangwechselbefehl auszugeben.

5. Elektrofahrrad nach einem der vorhergehenden Ansprüche, ferner umfassend einen Geschwindigkeitssensor (17) zur Erfassung einer Fahrzeuggeschwindigkeit des Elektrofahrrads, wobei die Steuereinheit (5) eingerichtet ist, bei einem Gangwechselbefehl einen Gang in Abhängigkeit der Fahrzeuggeschwindigkeit des Elektrofahrrads einzulegen.

6. Verfahren zum Betreiben eines pedalgetriebenen Elektrofahrrads, mit einem elektrischen Antrieb, der unmittelbar an einem Kurbeltrieb (8) als Mittelmotor angeordnet ist, einer Stromversorgung (6), einer Gangschaltung (4), die als Kettenschaltung ausgebildet ist, einem elektrischen Aktuator (3) zur Betätigung der Gangschaltung (4), einer Kette (7) und einer Steuereinheit (5), um den elektrischen Aktuator (3) und den elektrischen Antrieb (2) anzusteuern, umfassend die Schritte:
- Erfassen eines Gangwechselbefehls;
- Antreiben des elektrischen Antriebs (2), um die Kette (7) zu bewegen, so dass ein Gangwechsel möglich wird, und
- Ausführen des Gangwechsels mittels des elektrischen Aktuators (3).
**dadurch gekennzeichnet, dass**
- die Gangschaltung (4) in einen kleineren Gang als der beim Gangwechselbefehl eingelegte Gang geschaltet wird, wenn kein vom Fahrer aufgebrachtes Drehmoment am Kurbeltrieb erfasst wird.

7. Verfahren nach Anspruch 6, **dadurch gekennzeichnet, dass** die Kette (7) aus einem Stillstand heraus bewegt wird.

8. Verfahren nach einem der Ansprüche 6 oder 7, **dadurch gekennzeichnet, dass** die Gangschaltung (4) in einen kleineren Gang als der beim Gangwechselbefehl eingelegte Gang geschaltet wird, wenn ein Stillstand eines Kurbeltriebs erfasst wird.

9. Verfahren nach einem der Ansprüche 6 bis 8, **dadurch gekennzeichnet, dass** der durch die Gangschaltung (4) eingelegte Gang in Abhängigkeit einer Fahrzeuggeschwindigkeit des Elektrofahrrads eingelegt wird.

## Claims

1. Electric bicycle, comprising
- an electric drive (2) which is arranged directly on a crank drive (8), as a center-mounted motor,
- a power supply (6),
- a chain (7),
- a gearshift (4) which is embodied as a derailleur system,
- an electric actuator (3) for activating the gearshift (4), and
- a control unit (5) for actuating the electric drive (2) and the electric actuator (3),
- wherein the control unit (5) is configured to drive the electric drive (2) in the event of a gear change command, in order to move the chain (7) so as to permit a gear change by means of the electric actuator (3).
**characterized in that** the electric bicycle has the following component
- a torque sensor (16), which is configured to sense a torque applied by a rider,
- wherein the control unit (5) is configured to actuate the electric actuator (3) in such a way that when no torque is sensed at the crank drive, the gearshift shifts into a lower gear than the current gear.

2. Electric bicycle according to Claim 1, **characterized in that** the control unit (5) is configured to move the chain out of a stationary state.

3. Electric bicycle according to one of the preceding claims, also comprising a crank drive sensor (15) which is configured to sense a movement of the crank drive which is caused by a rider, wherein the control unit (5) is configured to actuate the electric actuator (3) in such a way that when a stationary state of the crank drive is sensed the gearshift (4) shifts into a lower gear than the current gear.

4. Electric bicycle according to one of the preceding claims, also comprising:
- a semi-automatic shift device (9) by means of which a rider enters a gear change command, and/or
- an evaluation unit which is configured to output an automatic gear change command on the basis of riding state variables of the electric bicycle.

5. Electric bicycle according to one of the preceding claims, also comprising a speed sensor (17) for sensing a vehicle speed of the electric bicycle, wherein the control unit (5) is configured to engage a gear as a function of a vehicle speed of the electric bicycle in the case of a gear change command.

6. Method for operating a pedal-driven electric bicycle, having an electric drive which is arranged on a crank drive (8) as a center-mounted motor, a power supply (6), a gearshift (4) which is embodied as a derailleur system, an electric actuator (3) for activating the gearshift (4), a chain (7) and a control unit (5) in order to actuate the electric actuator (3) and the electric drive (2), comprising the steps:
- sensing a gear change command;
- driving the electric drive (2) in order to move the chain (7) so that a gear change becomes possible, and
- executing the gear change by means of the electric actuator (3).
**characterized in that**
- the gear shift (4) is shifted to a lower gear than the gear engaged when the gear change command was commanded, if no torque applied by the rider to the crank drive is sensed.

7. Method according to Claim 6, **characterized in that** the chain (7) is moved out of a stationary state.

8. Method according to one of Claims 6 and 7, **characterized in that** the gearshift (4) shifts into a lower gear than the gear, which is engaged in the case of the gear change command if a stationary state of a crank drive is sensed.

9. Method according to one of Claims 6 to 8, **characterized in that** the gear which is engaged by the gearshift (4) is engaged as a function of a vehicle speed of the electric bicycle.

## Revendications

1. Bicyclette électrique, comprenant:
- un entraînement électrique (2) qui est disposé directement sur un mécanisme de pédalier (8) en tant que moteur central,
- une alimentation électrique (6),
- une chaîne (7),
- un changement de vitesse (4) qui est réalisé sous la forme d'un dérailleur,
- un actionneur électrique (3) pour actionner le changement de vitesse (4), et
- une unité de commande (5) pour commander l'entraînement électrique (2) et l'actionneur électrique (3),
- dans lequel l'unité de commande (5) est conçue pour entraîner l'entraînement électrique (2) lors d'une commande de changement de vitesse afin de déplacer la chaîne (7) pour permettre un changement de vitesse au moyen de l'actionneur électrique (3).
**caractérisé en ce que** le bicyclette électrique comprend les composants suivants
- un capteur de couple (16) conçu pour détecter un couple appliqué par un conducteur,
- dans lequel l'unité de commande (5) est conçue pour commander l'actionneur électrique (3) de manière à ce que, lorsqu'aucun couple n'est détecté sur le mécanisme de pédalier, le changement de vitesse passe à une vitesse inférieure à la vitesse actuelle.

2. Bicyclette électrique selon la revendication 1, **caractérisé en ce que** l'unité de commande (5) est conçue pour faire sortir la chaîne d'un état d'arrêt.

3. Bicyclette électrique selon l'une des revendications précédentes, comprenant en outre un capteur d'entraînement de mécanisme de pédalier (15) conçu pour détecter un mouvement du mécanisme de pédalier provoqué par un conducteur, dans lequel l'unité de commande (5) est conçue pour commander l'actionneur électrique (3) de manière à ce que, lorsqu'un arrêt du mécanisme de pédalier est détecté, le changement de vitesse (4) passe à une vitesse inférieure à la vitesse actuelle.

4. Bicyclette électrique selon l'une des revendications précédentes, comprenant en outre :
- un dispositif de changement de vitesse semi-automatique (9) au moyen duquel un conducteur introduit une commande de changement de vitesse, et/ou
- une unité d'évaluation conçue pour délivre rune commande de changement de vitesse automatique sur la base de grandeurs d'état de conduite de la bicyclette électrique.

5. Bicyclette électrique selon l'une des revendications précédentes, comprenant en outre un capteur de vitesse (17) pour détecter une vitesse de la bicyclette, dans lequel l'unité de commande (5) est conçue pour engager une vitesse en fonction de la vitesse de la bicyclette électrique en réponse à une commande de changement de vitesse.

6. Procédé pour le fonctionnement d'une bicyclette électrique, comportant un entraînement électrique qui est disposé directement sur un mécanisme de pédalier (8), en tant que moteur central, une alimentation électrique (6), un changement de vitesse (4) qui est réalisé sous la forme d'un dérailleur, un actionneur électrique (3) pour actionner le changement de vitesse (4), une chaîne (7) et une unité de commande (5) pour commander l'actionneur électrique (3) et l'entraînement électrique (2), comprenant les étapes consistant à :
- détecter une commande de changement de vitesse ;
- entraîner l'entraînement électrique (2) pour déplacer la chaîne (7) de manière à permettre un changement de vitesse, et
- effectuer le changement de vitesse au moyen de l'actionneur électrique (3)
**caractérisé en ce que**
- le changement de vitesse (4) passe à une vitesse inférieure à la vitesse engagée lors de la commande de changement de vitesse lorsqu'aucun couple appliqué par le conducteur n'est détecté sur le mécanisme de pédalier.

7. Procédé selon la revendication 6, **caractérisé en ce que** la chaîne (7) est sortie d'un état d'arrêt.

8. Procédé selon l'une des revendications 6 ou 7, **caractérisé en ce que** le changement de vitesse (4) est amené à passer à une vitesse inférieure à la vitesse engagée lors de la commande de changement de vitesse lorsqu'un arrêt d'un mécanisme de pédalier est détecté.

9. Procédé selon l'une des revendications 6 à 8, **caractérisé en ce que** la vitesse engagée par le changement de vitesse (4) est engagée en fonction d'une vitesse de la bicyclette électrique.
